Europäisches Patentamt

European Patent Office

Office européen des brevets

(11) Veröffentlichungsnummer: **0 307 545**

**A2**

(12) **EUROPÄISCHE PATENTANMELDUNG**

(21) Anmeldenummer: 88108558.3

(22) Anmeldetag: 28.05.88

(51) Int. Cl.4: **H04B 7/26 , H04K 1/02 , H04M 1/72**

(30) Priorität: 12.09.87 DE 3730672

(43) Veröffentlichungstag der Anmeldung:
22.03.89 Patentblatt 89/12

(84) Benannte Vertragsstaaten:
AT CH DE FR GB IT LI NL

(71) Anmelder: ROBERT BOSCH GMBH
Postfach 50
D-7000 Stuttgart 1(DE)

(72) Erfinder: Ketterling, Hans-Peter, Dipl.-Ing.
Manfred-von-Richthofen-Strasse 11
D-1000 Berlin 42(DE)

(74) Vertreter: Schmidt, Hans-Ekhardt
Robert Bosch GmbH Geschäftsbereich
Elektronik Patent- und Lizenzabteilung
Forckenbeckstrasse 9-13
D-1000 Berlin 33(DE)

(54) Digitales Funkübertragungsverfahren für schnurlose Telefone.

(57)

2.1 Der Erfindung liegt die Aufgabe zugrunde, ein Verfahren zu schaffen, das einfacher als die bekannten Verfahren zu realisieren ist, für kleine Reichweiten geeignet ist und ein Minimum an externen Störungen verursacht.

2.2 Die erfindungsgemäße Lösung besteht in der Anwendung folgender Maßnahmen:
Die analogen Sprachsignale werden mit adaptiver Deltamodulation digitalisiert. Die digitalisierten Sprachsignale werden durch Addition einer Pseudo-Zufallsfolge nach Modulo-2 verschlüsselt. Die Funkübertragung der digitalisierten Sprachsignale und Datensignale erfolgt mittels 2- oder 4-Lagen-Frequenzumtastung nach einem Zeitmultiplex-Verfahren im Duplex-Betrieb unter Anwendung eines Datensicherungskodes.

EP 0 307 545 A2

## Digitales Funkübertragungsverfahren für schnurlose Telefone

Die Erfindung betrifft ein schnurloses Telefon nach der Gattung des Anspruchs 1.

### Stand der Technik

Es ist ein vollständig auf digitaler Basis arbeitendes schnurloses Telefon bekannt (CEPT, Subworking Group R22 Doc. R22(85)26, Paris, 17. - 21. Juni 1985), bei dem die Digitalisierung der Sprachsignale nach einem adaptiven Differenzpulskodemodulationsverfahren (ADPCM) oder nach einem Verfahren mit kontinuierlicher variabler Schleifendeltamodulation (CVSO) stattfindet. Für die Übertragung, die mit einer Bitrate von 32 kbit/s erfolgt, ist der 900-MHz-Frequenzbereich vorgesehen. Die Funkübertragung zwischen den Baisstationen und den mobilen Stationen erfolgt im Zeitmultiplex (TDMA), wobei für beide Übertragungsrichtungen derselbe Funkkanal verwendet wird. Bei dem bekannten Funkübertragungsverfahren ist jeder Funkkanal in Zeitrahmen aufgeteilt, die aus elf Paaren von Zeitschlitzen bestehen. Ein Zeitschlitzpaar wird als Rufkanal, und andere Zeitschlitzkanäle werden als Verkehrskanäle verwendet. Das vorstehend beschriebene Verfahren setzt für seine Realisierung einen hohen technischen und wirtschaftlichen Aufwand voraus.

### Aufgabe

Der Erfindung liegt die Aufgabe zugrunde, ein digitales Funkübertragungsverfahren für schnurlose Telefone zu schaffen, das einfach aufgebaut ist, für kleinere Reichweiten (ca. 100 m) geeignet ist und ein Minimum an externen Störungen verursacht.

### Lösung und erzielbare Vorteile

Diese Aufgabe wird bei einem gattungsgemäßen digitalen Funkübertragungsverfahren durch die kennzeichnenden Merkmale des Anspruchs 1 gelöst.

Die durch die Erfindung erzielten Vorteile bestehen insbesondere darin, daß sich der technische und wirtschaftliche Aufwand für den Aufbau des digitalen Funkübertragungsverfahrens erheblich vereinfacht und daß trotzdem eine für den praktischen Einsatz durchaus ausreichende Reichweite zwischen Basisstation und mobiler Station erzielt wird, ohne daß es zu externen Störungen kommt und ohne daß ein unberechtigtes Mithören von Gesprächen möglich ist.

### Beschreibung der Erfindung

Bei dem erfindungsgemäßen digitalen Funkübertragungsverfahren für schnurlose Telefone werden die zunächst analog vorliegenden Sprachsignale unter Anwendung einer adaptiven Deltamodulation digitalisiert, wodurch eine Übertragungsrate von 32 kbit/s je Übertragungsrichtung erreichbar ist und auf einfache Weise eine Umsetzung der analogen Signale in PCM-Signale mit 64 kbit/s erfolgen kann. Um sicherzustellen, daß die Sprachübertragung nicht unberechtigterweise von Dritten abgehört wird, ist eine mit geringem Aufwand realisierbare Verschlüsselung der digitalen Signale durch eine Modulo-2-Addition nach einer Pseudo-Zufallsfolge vorgesehen. Eine Datensicherung bei der Übertragung wird durch eine 1F-Fehlerkorrektur pro Datenwort zu 7 bit vorgenommen, das heißt, es ist eine Kodierung mit 10 bit/je Datenwort möglich.

Die Übertragung erfolgt nach einem Vielfachzugriff-Zeitmu.;ex-Verfahren (TDMA) im Duplex-Betrieb mittels Frequenzen, die in der Bundesrepublik Deutschland durch die Deutsche Bundespost (DBP) festgelegt sind. Dadurch wird in der Basisstation und in der mobilen Station keine Weiche und nur eine lokale Frequenz benötigt, sofern die erste Zwischenfrequenz von zum Beispiel 1 MHz gleich dem Duplexabstand ist. Die Zeitschlitzlänge beträgt vorzugsweise 2,4 ms und die Schutzzeit 100 μs.

Je zwei schnurlose Telefone teilen sich ein Duplex-Frequenzpaar. Die für die Funkübertragung erforderliche HF-Bandbreite ergibt sich bei einem angenommenen Frequenzhub von ±50 kHz und einer Brutto-Bitrate von 100 kbit/s pro Richtung bei einer 2-Lagen-Frequenzumtastung mit einer Basisbandbreite von 50 kHz zu etwa 200 kHz für den Empfangsbetrieb; für den Sendebetrieb ergeben sich etwa 400 kHz. Der Trägerabstand beträgt dann etwa 300 kHz, und die Frequenzbandnutzung ist etwa

$$\frac{2 \times 3 \text{ Teilnehmer}}{2 \times 1 \text{ MHz}} = 3 \text{ Teilnehmer/MHz}.$$

Alternativ kann eine 4-Lagen-Frequenzumtastung (4 FSK) mit ±50 kHz Hub und 25 kHz Basisbandbreite vorgesehen werden, wodurch sich aufgrund des halbierten Trägerabstandes eine Frequenzbandnutzung von 6 Teilnehmern/MHz ergeben würde.

Für die Empfangsteile von Basisstation und mobiler Station ergibt sich eine Empfängerempfindlichkeit von < -100 dBm bei einer Sendeleistung von 0 dBm. Die erzielbare Rufweite beträgt maximal einige hundert Meter im Freien. Die Gleichkanalunterdrückung liegt bei etwa -10 dB.

Die Frequenzbelegung wird vorzugsweise derart vorgenommen, daß ein Übertragungsfrequenzband von beispielsweise bis etwa 2 GHz in zwei Teilbänder mit einem Duplexabstand von beispielsweise 1 MHz aufgeteilt wird. Die Basisstationen werden vorzugsweise mit spannungsgesteuerten TCXO-Oszillatoren· ausgerüstet, die eine zulässige Abweichung von ±2,5 ppm (parts per million) entsprechend ±5 kHz aufweisen. Die Oszillatoren der Handapparate sind spannungsgesteuerte VCXO-Oszillatoren mit einer zulässigen Abweichung von ±10 ppm. Die genannten Oszillatoren werden auf eine Abweichung $\Delta f = 0$ nachgeregelt.

Die notwendige Synchronisierung bei der Funkübertragung erfolgt in an sich bekannter Weise derart, daß eine Basisstation ständig einen freien Funkkanal von zum Beispiel 100 Funkkanälen sucht und daß die zugehörige mobile Station in den Pausenzeitschlitzen antwortet. Findet eine andere Basisstation keinen freien Funkkanal, so sucht sie in ihrem Frequenzband die noch freien Zeitschlitze eines bereits einfach belegten Funkkanals aus. Sind alle Frequenzen doppelt belegt, so ist kein Gespräch möglich.

Drei der Funkkanäle dienen als Organisationskanäle. Auf jeweils einem der drei Kanäle kann die Basisstation die mobile Station oder umgekehrt nach dem ALOHA-Prinzip rufen. In der Bereitschaftsphase wird durch einen regelmäßigen Austausch von Datentelegrammen die Verbindung auf einem der drei Organisationskanäle aufrechterhalten. Bei Störungen wird einer der beiden anderen Organisationskanäle benutzt. Die Telegrammlängen für alle Prozeduren können bei ca. 2 bis 5 ms liegen, umfassen dann etwa 200 bis 500 bit. Schädliche Kollisionen bei der Übertragung von Datentelegrammen werden durch eine gute Gleichkanalunterdrückung vermindert. Die Zuweisung eines Gesprächskanals nimmt die Basisstation aufgrund der ihr bekannten Belegungsprofile der anderen Funkkanäle vor. Eine Qualitätsüberwachung der Verbindung ist vorgesehen. Im Störungsfall meldet die mobile Station den Störungsfall der Basisstation. Alternativ stellt die Basisstation die Störung selbst fest. Die Basisstation prüft auch zwischenzeitlich alle anderen Funkkanäle und gibt über die gesprächsbegleitende Signalisierung gegebenenfalls einen Kanalumschaltbefehl, so daß das Gespräch auf einem anderen Funkkanal fortgesetzt werden kann.

## Ansprüche

1. Digitales Funkübertragungsverfahren für Sprache und Daten bei schnurlosen Telefonen, die aus je einer Basisstation und einer mobilen Station bestehen, dadurch gekennzeichnet, daß die analogen Sprachsignale mit adaptiver Deltamodulation digitalisiert werden, daß die digitalisierten Sprachsignale durch Addition einer Pseudo-Zufallsfolge nach Modulo-2 verschlüsselt werden und daß die Funkübertragung der digitalisierten Sprachsignale mittels 2- oder 4-Lagen-Frequenzumtastung nach einem Zeitmultiplex-Verfahren im Duplex-Betrieb unter Anwendung eines Datensicherungskodes erfolgt.

2. Verfahren nach Anspruch 1, dadurch gekennzeichnet, daß der Duplexabstand der ersten Zwischenfrequenz entspricht.

3. Verfahren nach Anspruch 1, dadurch gekennzeichnet, daß die Funkübertragung mit 32 kbit/s netto erfolgt.

4. Verfahren nach Anspruch 1, dadurch gekennzeichnet, daß sich je zwei schnurlose Telefone ein Duplex-Frequenzpaar teilen.

5. Verfahren nach Anspruch 1, dadurch gekennzeichnet, daß bei dem Zeitmultiplex-Verfahren die Zeitschlitzlänge etwa 2,4 ms und die Schutzzeit etwa 100 μs betragen.

6. Verfahren nach Anspruch 1, dadurch gekennzeichnet, daß bei einer 2-Lagen-Frequenzumtastung (2 FSK) ein Frequenzhub von ±50 kHz, eine Brutto-Bitrate von 100 kbit/s pro Übertragungsrichtung und eine Basisbandbreite von etwa 50 kHz gewählt werden.

7. Verfahren nach Anspruch 1, dadurch gekennzeichnet, daß bei einer 4-Lagen-Frequenzumtastung (4 FSK) ein Frequenzhub von ±50 kHz, eine Brutto-Bitrate von 100 kbit/s und eine Basisbandbreite von etwa 25 kHz gewählt werden.

8. Verfahren nach einem der Ansprüche 1 bis 7, dadurch gekennzeichnet, daß für je 100 Funkkanäle drei Funkkanäle als Organisationskanäle verwendet werden, von denen jeweils ein Funkkanal der Rufübertragung dient.